# EUROPEAN PATENT APPLICATION

(11) **EP 2 966 799 A1**
(43) Date of publication of application: **13.01.2016**
(21) Application number: 15158604.7
(22) Date of filing: 11.03.2015
(51) Int. Cl.: H04L 5/00, H04W 16/14, H04W 84/12

(54) **MULTI-BAND WIRELESS COMMUNICATION DEVICE AND MULTI-BAND WIRELESS COMMUNICATION METHOD**

(30) Priority: 09.07.2014 JP 2014141717
(71) Applicant: Kabushiki Kaisha Toshiba, Tokyo (JP)
(72) Inventor: Horisaki, Koji, Tokyo (JP)
(74) Representative: Hoffmann Eitle

(57) **Abstract**

The wireless communication device includes a first wireless unit, a second wireless unit, a detecting unit and a control unit. For the first wireless unit, a first channel belonging to a first band is set outside a used band of a second wireless communication system in a used band of a first wireless communication system. For the second wireless unit, a channel belonging to a second band is set in the used band of the second wireless communication system. The detecting unit detects a communication signal through the second wireless communication system. The control unit starts wireless communications performed on the first channel. The control unit causes the detecting unit to perform the detection. The control unit sets a channel according to a result of the detection for the second wireless unit. The control unit then shifts to wireless communications performed through the first and second wireless units.

## Description

### FIELD

Embodiments described herein relate generally to a wireless communication device and a wireless communication method.

### BACKGROUND

Frequency bands usable for wireless LANs include frequency bands used by wireless communication systems other than wireless LANs. For example, the 5 GHz band is also used for radar communications.

In the wireless communications through wireless LANs, it is mandatory to avoid interference with radars. Thus, a wireless LAN communication device has a function called dynamic frequency selection (DFS). DFS is a function for dynamically changing a channel used for a wireless LAN so as to prevent the influence of the wireless communications through the wireless LAN on radar.

In DFS, before the beginning of use of a channel belonging to a used radar band, a radar wave for the channel is monitored at least for 60 seconds.

However, such monitoring of a radar wave delays the start of wireless communications through a wireless LAN.

Thus, wireless communications need to be quickly started in a wireless communication device.

### BRIEF DESCRIPTION OF THE DRAWINGS

FIG. 1 is a block diagram showing an example of the configuration of a wireless communication device 10 according to a first embodiment;
FIG. 2 is a schematic diagram illustrating the used band of the wireless LAN;
FIG. 3 is a schematic diagram showing channel widths usable for the wireless LAN;
FIG. 4 is a conceptual diagram showing wireless communications with the channel widths of FIG. 3;
FIG. 5 is a flowchart showing an operation example of the wireless communication device 10 according to the first embodiment;
FIG. 6 is a flowchart showing the operation example of the wireless communication device 10 according to the second embodiment;
FIG. 7 is a flowchart showing the operation example of the wireless communication device 10 according to the third embodiment; and
FIG. 8 is a flowchart showing the operation example of the wireless communication device 10 according to the fourth embodiment.

### DETAILED DESCRIPTION

A wireless communication device according to an embodiment includes a first wireless unit, a second wireless unit, a detecting unit and a control unit. For the first wireless unit, a first channel belonging to a first band is set outside a used band of a second wireless communication system in a used band of a first wireless communication system. For the second wireless unit, a channel belonging to a second band is set in the used band of the second wireless communication system in the used band of the first wireless communication system. The detecting unit detects a communication signal through the second wireless communication system according to a reception result on the channel belonging to the second band by the second wireless unit. The control unit controls the first and second wireless units, and the detecting unit and performs wireless communications through the first wireless communication system. The control unit starts wireless communications performed on the first channel through the first wireless unit. The control unit causes the detecting unit to perform the detection. The control unit sets a channel according to a result of the detection for the second wireless unit. The control unit then shifts to wireless communications performed through the first and second wireless units.

Embodiments will be described below with reference to the accompanying drawings. The embodiments below are merely exemplary and thus do not limit the present invention.

### (First Embodiment)

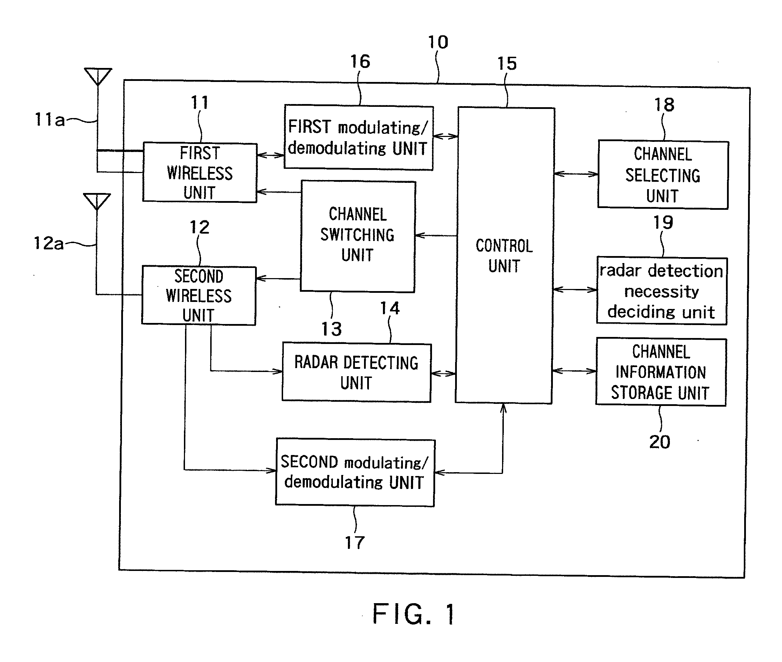

FIG. 1 is a block diagram showing an example of the configuration of a wireless communication device 10 according to a first embodiment.

As shown in FIG. 1, the wireless communication device 10 includes a first wireless unit 11, a second wireless unit 12, a channel switching unit 13, a radar detecting unit 14, and a control unit 15. The radar detecting unit 14 is an example of a detecting unit.

As shown in FIG. 1, the wireless communication device 10 further includes a first modulating/demodulating unit 16, a second modulating/demodulating unit 17, a channel selecting unit 18, a radar detection necessity deciding unit 19, and a channel information storage unit 20.

The wireless communication device 10 according to the present embodiment provided with the aforementioned components performs wireless communications through a wireless LAN, an example of a first wireless communication system, that is, wireless communications in compliance with the IEEE802.11 standard.

The first wireless unit 11 will be specifically described below.

As shown in FIG. 1, a first antenna 11a is connected to the first wireless unit 11.

For the first wireless unit 11, a first channel belonging to a first band is set outside the used band of a radar system in the used band of the wireless LAN. The radar system is an example of a second wireless communication system.

The used band of the wireless LAN will be described below.

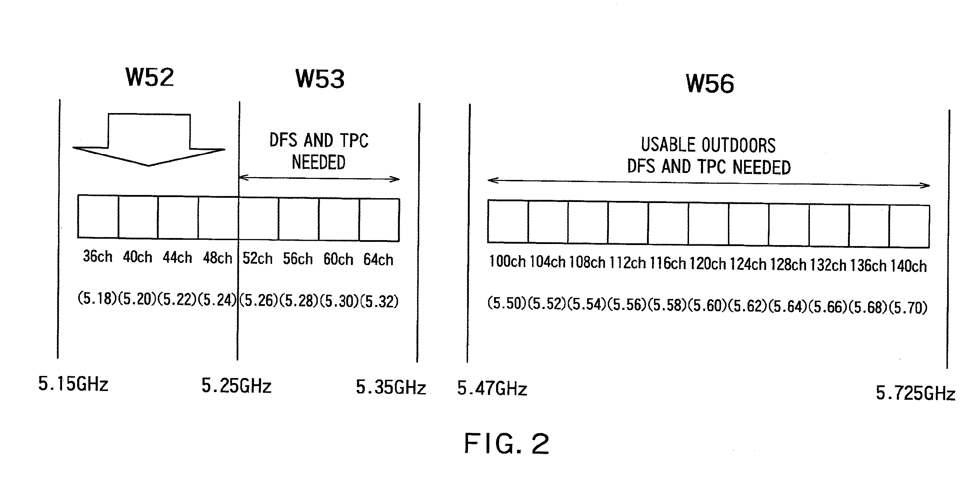

FIG. 2 is a schematic diagram illustrating the used band of the wireless LAN. FIG. 2 shows the 5 GHz band as the used band of the wireless LAN.

The 5 GHz band shown in FIG. 2 is used by a smaller number of users than in the 2.4 GHz band, which is not shown, and hardly causes radio wave interference between wireless LANs. As will be described later, on the other hand, the 5 GHz band contains the used band of the radar system.

As shown in FIG. 2, the 5 GHz band is divided into three bands W52, W53, and W56.

The band W52 ranges from 5.15 GHz to 5.25 GHz. As shown in FIG. 2, the band W52 has four channels 36ch, 40ch, 44ch, and 48ch.

The band W53 ranges from 5.25 GHz to 5.35 GHz. As shown in FIG. 2, the band W53 has channels 52ch, 56ch, 60ch, and 64ch.

The band W56 ranges from 5.47 GHz to 5.725 GHz. As shown in FIG. 2, the band W56 has channels 100ch, 104ch, 108ch, 112ch, 116ch, 120ch, 124ch, 128ch, 132ch, 136ch, and 140ch.

Of the three bands W52, W53, and W56 above, the band W52 lies outside the used band of the radar system.

In other words, the band W52 is an example of the first band. The first channel may be any channel belonging to the band W52 or may belong to the 2.4 GHz band.

If the wireless LAN is used on the channel belonging to the band W52, the wireless communication device 10 does not need to operate DFS or TPC (Transmit Power Control).

On the other hand, the bands W53 and W56 are contained in the used band of the radar system.

The band W53 only allows the indoor use of the wireless LAN. The band W56 further allows the outdoor use of the wireless LAN.

If the wireless LAN is used on the channel belonging to the band W53 or W56, the wireless communication device 10 needs to operate DFS or TPC.

The first wireless unit 11 shown in FIG. 1 transmits and receives a communication signal on the first channel through the wireless LAN through the first antenna 11a.

The first wireless unit 11 may be configured for multi-carrier wireless transmission. The multi-carrier wireless transmission may be transmission of orthogonal frequency division multiplexing (OFDM) and so on.

In the case of wireless transmission performed by the first wireless unit 11 according to OFDM, signals transmitted and received in the first wireless unit 11 may have formats including preambles, guard intervals, and data symbols.

In this case, the preamble is a signal for detection and synchronization of the leading edge position of a signal. The data symbol is a signal containing information to be transmitted. The guard interval is a signal for suppressing interference that is likely to occur between adjacent symbols.

Moreover, the first channel for the first wireless unit 11 may be set by receiving an oscillation signal corresponding to the first channel in the first wireless unit 11 from the channel switching unit 13 and so on.

The specific structure of the first wireless unit 11 having this function is not limited. For example, the first wireless unit 11 may include the electronic components of a transmission system and a reception system.

If the first wireless unit 11 includes the electronic components of a transmission system and a reception system, the electronic components of the transmission system may include a digital-to-analog converter, a filter, a mixer, a power amplifier, and a transmission/reception changeover switch, which are not shown.

In this case, the digital-to-analog converter converts a digital transmission signal, which is outputted from the first modulating/demodulating unit 16, to an analog signal, and then outputs the converted transmission signal to the filter.

The filter removes the unnecessary frequency components of the transmission signal outputted from the digital-to-analog converter, and then outputs the transmission signal free of unnecessary frequency components to the mixer.

The mixer receives the oscillation signal at a frequency corresponding to the first channel and the transmission signal outputted from the filter. Subsequently, the mixer mixes the inputted oscillation signal and transmission signal so as to perform up-conversion on the transmission signal, and then outputs the up-converted transmission signal to the power amplifier.

The power amplifier amplifies the transmission signal up-converted by the mixer, and then the amplified transmission signal is transmitted from the first antenna 11a through the transmission/reception changeover switch.

On the other hand, the electronic components of the reception system may include a transmission/reception changeover switch, a low noise amplifier, a mixer, a filter, and an analog-to-digital converter, which are not shown.

In this case, the low noise amplifier receives a receiving signal, which is received by the first antenna 11a, through the transmission/reception changeover switch.

The low noise amplifier amplifies the inputted receiving signal and then outputs the amplified receiving signal to the mixer.

The mixer receives the receiving signal outputted from the low noise amplifier and the oscillation signal at the frequency corresponding to the first channel. Subsequently, the mixer mixes the inputted receiving signal and oscillation signal so as to perform down conversion on the receiving signal, and then outputs the down-converted receiving signal to the filter.

The filter removes the unnecessary frequency components of the receiving signal outputted from the mixer and then outputs the receiving signal free of unnecessary frequency components to the first modulating/demodulating unit 16.

The second wireless unit 12 in FIG. 1 will be specifically described below.

As shown in FIG. 1, a second antenna 12a is connected to the second wireless unit 12.

For the second wireless unit 12, a channel belonging to a second band is set in the used band of the radar system in the used band of the wireless LAN. The aforementioned bands W53 and W56 are examples of the second band.

The second wireless unit 12 receives the communication signal of the radar system through the second antenna 12a on the channel belonging to the second band set for the second wireless unit 12.

The setting of the channel for the second wireless unit 12 and the specific structure of the second wireless unit 12 are identical to those of the first wireless unit 11.

The channel switching unit 13 shown in FIG. 1 will be specifically described below.

The channel switching unit 13 switches the channel set for the second wireless unit 12.

The channel switching unit 13 may switch the channel set for the first wireless unit 11, within the first band.

The specific structure of the channel switching unit 13 having this function is not limited. For example, the channel switching unit 13 may include an oscillation circuit (not shown) that outputs, to the wireless units 11 and 12, the oscillation signals corresponding to the channels to be set for the wireless units 11 and 12.

The oscillation circuit may output an oscillation signal according to a control signal from the control unit 15. Specifically, the oscillation circuit may generate a reference oscillation signal, multiply the generated reference oscillation signal by a multiplier according to the control signal from the control unit 15, and then output the signal to the wireless units. 11 and 12.

Furthermore, the oscillation circuit may include a phase locked loop (PLL).

The radar detecting unit 14 shown in FIG. 1 will be specifically described below.

The radar detecting unit 14 receives a reception result on the channel belonging to the second band set through the second wireless unit 12. The radar detecting unit 14 detects the communication signal through the radar system based on the inputted reception result.

A signal to be detected by the radar detecting unit 14 may have signal strength not lower than a threshold value, out of the communication signals through the radar system. Thus, if the threshold value of signal strength is provided for the signal to be detected, a detection result by the radar detecting unit 14 is undetected even when a communication signal lower than the threshold value is received by the second wireless unit 12.

The specific structure of the radar detecting unit 14 having this function is not limited. For example, the radar detecting unit 14 may be a semiconductor integrated circuit.

The semiconductor integrated circuit may be embodied by a signal processing circuit including a media access control (MAC) unit and a baseband processor (Baseband Processor) unit.

The signal processing circuit may have the function of transmitting and receiving the communication signal. Specifically, the signal processing circuit may transmit and receive the communication signal between the wireless units 11 and 12 or detect the error of the communication signal.

The control unit 15 shown in FIG. 1 will be specifically described below.

The control unit 15 controls the first wireless unit 11, the second wireless unit 12, the channel switching unit 13, and the radar detecting unit 14.

Specifically, the control unit 15 starts wireless communications performed on the first channel through the first wireless unit 11 and causes the radar detecting unit 14 to detect the signal.

In this case, wireless communications on the first channel through the first wireless unit 11 may be wireless communications in a single-input and single-output (SISO) mode.

Adoption of the SISO mode only requires at least the two wireless units, that is, the two antennas in the wireless communication device 10, thereby suppressing the number of components.

In the case of the multiple first wireless units 11, on the other hand, wireless communications on the first channel through the first wireless unit 11 may be wireless communications in a multiple-input and multiple-output (MIMO) mode. The MIMO mode may be a multiuser MIMO mode.

Adoption of the MIMO mode can increase a transmission speed.

When the radar detecting unit 14 detects the signal, the control unit 15 may cause the channel switching unit 13 to switch, in the second band, the channel set for the second wireless unit 12. When the channel is switched in the second band, the control unit 15 may cause the channel switching unit 13 to sequentially switch all the channels in the second band.

The channels are all switched in a sequential manner, allowing the radar detecting unit 14 to sequentially detect signals on all the channels in the second band.

Alternatively, the control unit 15 may cause the channel switching unit 13 to sequentially switch the channels set for the second wireless unit 12 until the first detection of the second channel, which will be described later. Since the channels are sequentially switched until the first detection of the second channel, the radar detecting unit 14 detects the signals until the first detection of the second channel.

Moreover, after wireless communications on the first channel through the first wireless unit 11 and the start of detection using the radar detecting unit 14, the control unit 15 causes the channel switching unit 13 to switch the channel set for the second wireless unit 12 to another channel according to a detection result. That is, the control unit 15 sets a channel according to the detection result for the second wireless unit 12.

The switching of the channel according to the detection result shifts the control unit 15 from wireless communications performed on the first channel through the first wireless unit 11 to wireless communications performed through the first wireless unit 11 and the second wireless unit 12.

Specifically, in the detection, the communication signal through the radar system may be detected on all the channels to be detected, that is, all the channels belonging to the second band.

In this way, if the communication signal through the radar system is detected on all the channels belonging to the second band, the control unit 15 causes the channel switching unit 13 to switch the channel set for the second wireless unit 12 to the first channel.

The switching to the first channel shifts the control unit 15 to wireless communications performed through the first wireless unit 11 and the second wireless unit 12 on the first channel.

The wireless communications through the first wireless unit 11 and the second wireless unit 12 on the first channel may be wireless communications in the MIMO mode.

On the other hand, in the detection, the second channel may be detected in the second band. The communication signal through the radar system is undetected on the second channel.

In this way, if the second channel is detected in the second band, the control unit 15 causes the channel switching unit 13 to switch the channel set for the second wireless unit 12 to the second channel.

The switching to the second channel shifts the control unit 15 to wireless communications performed on the first and the second channel through the first wireless unit 11 and the second wireless unit 12.

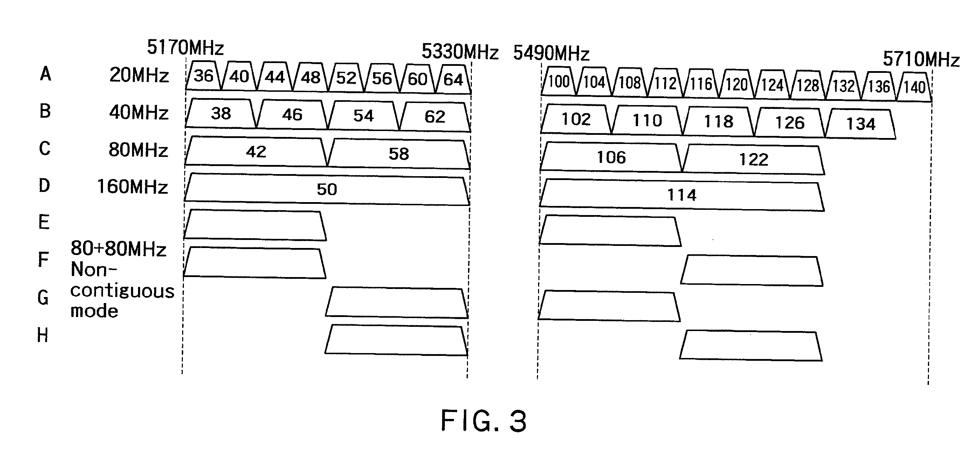

Wireless communications through the first wireless unit 11 and the second wireless unit 12 on the first and second channels may be wireless communications at 80 + 80 MHz in a non-contiguous mode (see FIG. 3) as will be described below.

FIG. 3 is a schematic diagram showing channel widths usable for the wireless LAN. In the schematic diagram, A indicates 20 MHz, B indicates 40 MHz, C indicates 80 MHz, and D to H indicate 160 MHz.

As shown in FIG. 3, at 80 + 80 MHz in the non-contiguous mode (E to H), transmission at 160 MHz can be parallel transmission using two discontiguous 80 MHz bands. In other words, even if 160 MHz bands cannot be contiguously obtained at 80 + 80 MHz in the non-contiguous mode, a transmission speed equivalent to that at 160 MHz can be obtained.

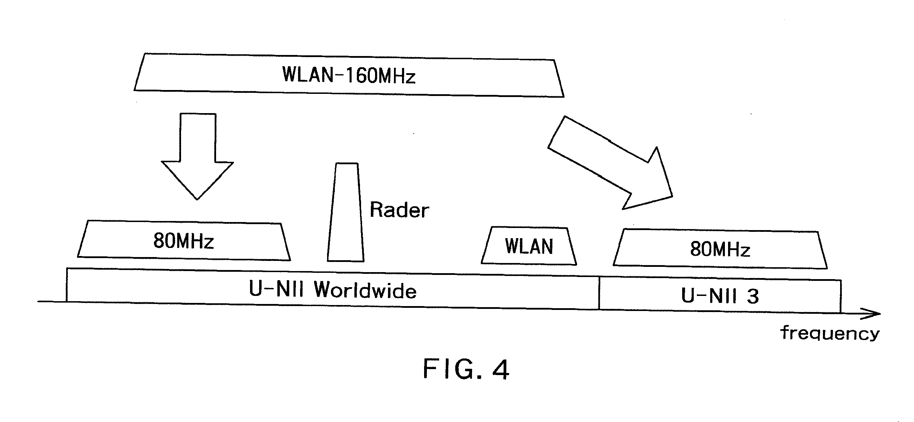

FIG. 4 is a conceptual diagram showing wireless communications with the channel widths (E to H) of FIG. 3. As shown in FIG. 4, the middle of the channel (a U-NII Worldwide channel shown in the example of FIG. 4) is used for radar communications. Thus, 160 MHz bands may not be contiguously obtained.

However, even if 160 MHz bands cannot be contiguously obtained, two 80 MHz bands (U-NII Worldwide and U-NII3 channels in the example of FIG. 4) are used at 80 + 80 MHz in the non-contiguous mode, achieving transmission at 160 MHz.

The specific structure of the control unit 15 having this function is not limited. For example, the control unit 15 may include a processor and a storage device.

If the control unit 15 includes a processor, the processor may be a CPU or an MPU. If the control unit 15 includes a storage device, the storage device may include ROM and RAM.

The storage device stores programs to be executed by the processor. Moreover, the storage device temporarily stores the calculation results of the processor.

The first modulating/demodulating unit 16 and the second modulating/demodulating unit 17 shown in FIG. 1 will be specifically described below.

The first modulating/demodulating unit 16 demodulates the communication signal received by the first wireless unit 11 through the wireless LAN. Moreover, the first modulating/demodulating unit 16 modulates the communication signal through the wireless LAN before the signal is transmitted from the first wireless unit 11.

The second modulating/demodulating unit 17 demodulates the communication signal received by the second wireless unit 12 through the wireless LAN. Moreover, the second modulating/demodulating unit 17 modulates the communication signal through the wireless LAN before the signal is transmitted from the second wireless unit 12.

The specific structures of the modulating/demodulating units 16 and 17 having this structure are not limited. For example, the modulating/demodulating units 16 and 17 may be embodied by a signal processing circuit or the like provided with the MAC and BBP units.

The channel selecting unit 18 in FIG. 1 will be specifically described below.

The channel selecting unit 18 evenly selects the channels set for the wireless units 11 and 12, without intensively using only specific ones of the channels for the wireless communications through the wireless LAN. A selection result from the channel selecting unit 18 is reflected through the control unit 15 to a channel switching operation performed by the channel switching unit 13.

For example, the channel selecting unit 18 may use random numbers to randomly select the channel of the first wireless unit 11 from all the channels of the first band and randomly select the channel of the second wireless unit 12 from all the channels of the second band.

Furthermore, the channel selecting unit 18 may accumulate statistical data for the so far used channels and then select the channels according to the statistical data so as to mean the usage rates of all the channels.

The specific structure of the channel selecting unit 18 having this function is not limited. For example, the channel selecting unit 18 may be embodied by a processor.

The processor may also act as the control unit 15.

The radar detection necessity deciding unit 19 shown in FIG. 1 will be specifically described below.

The radar detection necessity deciding unit 19 decides whether or not the channel selected by the channel selecting unit 18 requires radar detection. If the channel selecting unit 18 selects the channel belonging to the second band, the radar detection necessity deciding unit 19 decides that radar detection is necessary.

The decision result of the radar detection necessity deciding unit 19 is reflected to the presence or absence of detection in the radar detecting unit 14.

The specific structure of the radar detection necessity deciding unit 19 having this function is not limited. For example, the radar detection necessity deciding unit 19 may be embodied by a processor.

The processor may also act as the control unit 15.

The channel information storage unit 20 in FIG. 1 will be specifically described below.

The channel information storage unit 20 stores channel information indicating the frequency bands to which the channels belong, channel types contained in the frequency bands, and the necessity or non-necessity of DFS in each frequency band. The channel information is used for selecting the channels by the channel selecting unit 18 and detecting the signal by the radar detecting unit 19.

The channel information storage unit 20 may be embodied by a storage device, e.g., a ROM.

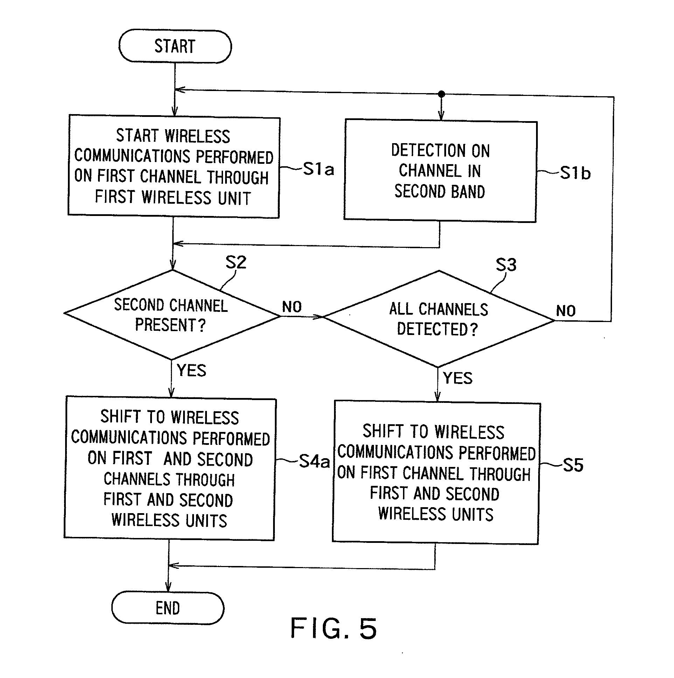

Referring to FIG. 5, an operation example of the wireless communication device 10 according to the present embodiment will be described below. The operation example is an embodiment of a wireless communication method.

FIG. 5 is a flowchart showing an operation example of the wireless communication device 10 according to the first embodiment.

In the present embodiment, in step 1a (S1a), wireless communications on the first channel through the first wireless unit 11 are first started under the control of the control unit 15 on the first wireless unit 11. At this point, in step 1b (S1b), the radar detecting unit 14 detects the channel belonging to the second band under the control of the control unit 15 on the radar detecting unit 14.

Subsequently, in step 2 (S2), the control unit 15 decides whether the second channel, on which the communication signal of the radar system is undetected, has been detected or not in the detection of step 1b (S1b).

In the case of a positive decision result in step 2 (S2), the process advances to step 4a (S4a). In the case of a negative decision result in step 2 (S2), the process advances to step 3 (S3).

If the process advances to step 4a (S4a), the control unit 15 causes the channel switching unit 13 to switch the channel set for the second wireless unit 12 to the second channel. The switching to the second channel shifts the control unit 15 to wireless communications performed on the second channel through the first wireless unit 11 and the second wireless unit 12.

On the other hand, if the process advances to step 3 (S3), the control unit 15 decides whether all the channels belonging to the second band have been detected or not.

In the case of a positive detection result in step 3 (S3), the process advances to step 5 (S5). On the other hand, in the case of a negative decision result in step 3 (S3), the process returns to step 1b (S1b).

Subsequently, in step 5 (S5), the control unit 15 causes the channel switching unit 13 to switch the channel set for the second wireless unit 12 to the first channel. The switching to the first channel shifts the control unit 15 to wireless communications performed on the first channel through the first wireless unit 11 and the second wireless unit 12.

As has been discussed, the wireless communication device 10 of the present embodiment can quickly start wireless communications performed through the first wireless unit 11 on the first channel that does not need a DFS operation.

Moreover, according to the present embodiment, wireless communications on the first channel through the first wireless unit 11 are started, and then the channel is switched according to the detection of the second band. Thus, a transmission speed can be increased without interference with radar waves.

For example, even if the second band is fully used for radar communications, a shift to wireless communications on the first channel through the first and second wireless units 11 and 12 can increase a transmission speed. Moreover, even if the second band contains the channel used for radar communications, a shift to wireless communications on the first and second channels through the first and second wireless units 11 and 12 can achieve transmission at 160 MHz.

### (Second Embodiment)

A second embodiment will be described below. In the explanation of the present embodiment, components corresponding to those of the first embodiment are indicated by the same reference numerals as in the first embodiment and the explanation thereof is omitted.

In a wireless communication device 10 of the present embodiment, a shift to wireless communications through first and second wireless units 11 and 12 may switch a channel set for the first wireless unit 11.

Specifically, a radar detecting unit 14 may detect the aforementioned second channel, that is, a channel where the communication signal through a radar system is undetected in a second band.

In this way, if the second channel is detected in the second band, a control unit 15 causes a channel switching unit 13 to switch the channel set for the first wireless unit 11 to the second channel. The switching to the second channel shifts the control unit 15 to wireless communications performed on the second channel through the first wireless unit 11 and the second wireless unit 12.

The wireless communications on the second channel through the first and second wireless units 11 and 12 may be wireless communications in a MIMO mode.

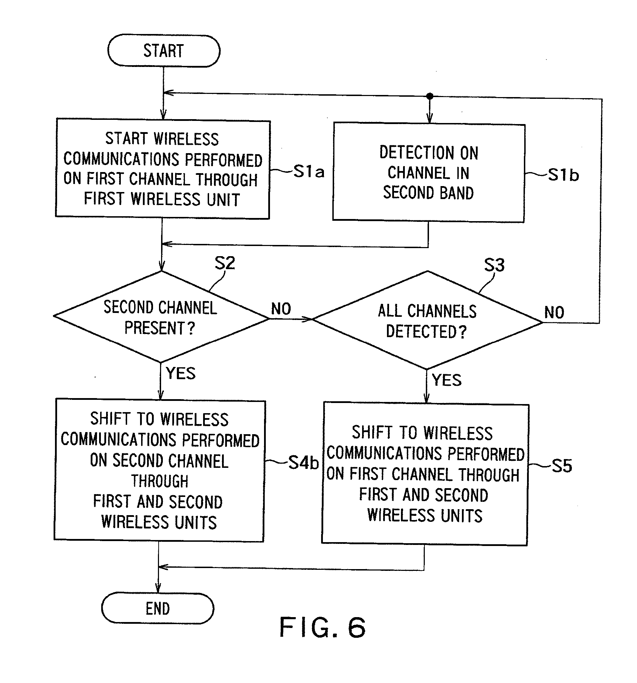

Referring to FIG. 6, an operation example of the wireless communication device 10 according to the present embodiment will be describe below. The operation example is an embodiment of a wireless communication method.

FIG. 6 is a flowchart showing the operation example of the wireless communication device 10 according to the second embodiment.

As shown in FIG. 6, in the present embodiment, step 4b (S4b) is performed instead of the step 4a (S4a) illustrated in FIG. 5. In step 4b (S4b), the control unit 15 causes the channel switching unit 13 to switch the channel set for the first wireless unit 11 to the second channel.

The switching to the second channel shifts the control unit 15 to wireless communications performed on the second channel through the first wireless unit 11 and the second wireless unit 12.

According to the wireless communication device 10 of the present embodiment, a transmission speed can be increased using a channel with an undetected radar wave after wireless communications are quickly started.

Other operations of the second embodiment are identical to those of the first embodiment. Thus, the second embodiment can obtain the effect of the first embodiment.

### (Third Embodiment)

A third embodiment will be described below. In the explanation of the present embodiment, components corresponding to those of the first embodiment are indicated by the same reference numerals as in the first embodiment and the explanation thereof is omitted.

In a wireless communication device 10 of the present embodiment, after a shift to wireless communications on first and second channels through first and second wireless units 11 and 12, the radar detecting unit 14 performs detection on the second channel. The detection is performed under the control of the control unit 15 on the radar detecting unit 14.

In the detection on the second channel, the communication signal through a radar system may be detected on the second channel.

In this way, if the communication signal through the radar system is detected on the second channel, the control unit 15 causes the radar detecting unit 14 to detect channels other than the second channel in a second band. The detection aims at searching for a third channel where the communication signal through the radar system is undetected.

The control unit 15 may cause the radar detecting unit 14 to perform detection in search for the third channel, starting from a channel having a frequency close to that of the second channel. Since the priority detection starts from the channel having a frequency close to that of the second channel, the third channel can be quickly detected.

Alternatively, the control unit 15 may detect a plurality of channels where the communication signal of the radar system is undetected, and then determine the channel in the best receiving state (e.g., received power) as the third channel from the detected channels. The determination of the third channel can immediately improve the communication quality of wireless communications.

If the third channel is detected in the detection aiming at searching for the third channel, the control unit 15 causes the channel switching unit 13 to switch the channel set for the second wireless unit 12 to the third channel.

The switching to the third channel shifts the control unit 15 to wireless communications performed on the first and third channels through the first and second wireless units 11 and 12.

On the other hand, the third channel may not be detected in the detection aiming at searching for the third channel. If the third channel is not detected, the control unit 15 causes the channel switching unit 13 to switch the channel set for the second wireless unit 12 to the first channel.

The switching to the first channel shifts the control unit 15 to wireless communications performed on the first channel through the first and second wireless units 11 and 12.

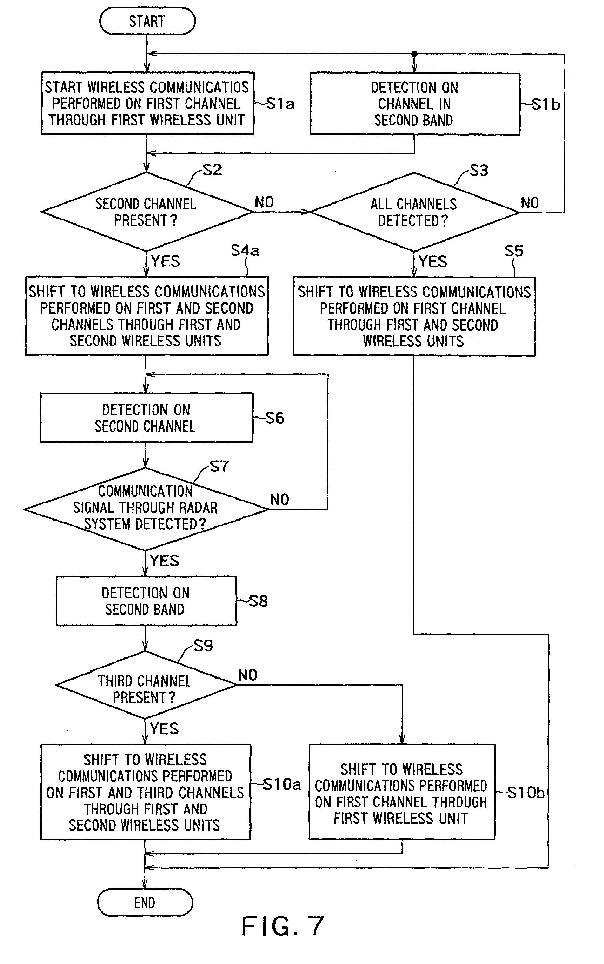

Referring to FIG. 7, an operation example of the wireless communication device 10 according to the present embodiment will be described below. The operation example is an embodiment of a wireless communication method.

FIG. 7 is a flowchart showing the operation example of the wireless communication device 10 according to the third embodiment.

As shown in FIG. 7, in the present embodiment, step 6 (S6) is performed after step 4a (S4a) in FIG. 5. In step 6 (S6), the control unit 15 causes the radar detecting unit 14 to perform detection on the second channel.

Subsequently, in step 7 (S7), the control unit 15 decides whether or not the communication signal through the radar system has been detected in the second channel in the detection of step 6 (S6).

In the case of a positive decision result in step 7 (S7), the process advances to step (S8). On the other hand, in the case of a negative decision result in step 7 (S7), the process returns to step 6 (S6).

Subsequently, in step 8 (S8), the control unit 15 causes the radar detecting unit 14 to perform detection on the second band aiming at searching for the third channel, that is, the channel where the communication signal through the radar system is undetected.

After that, in step 9 (S9), the control unit 15 decides whether or not the third channel has been detected in the detection of step 8 (S8).

In the case of a positive detection result in step 9 (S9), the process advances to step 10a (S10a). On the other hand, in the case of a negative decision result in step 9 (S9), the process advances to step 10b (S10b).

If the process advances to step 10a (S10a), the control unit 15 causes the channel switching unit 13 to switch the channel set for the second wireless unit 12 to the third channel.

The switching to the third channel shifts the control unit 15 to wireless communications performed on the first and third channels through the first and second wireless units 11 and 12.

On the other hand, if the process advances to step 10b (S10b), the control unit 15 causes the channel switching unit 13 to switch the channel set for the second wireless unit 12 to the first channel.

The switching to the first channel shifts the control unit 15 to wireless communications performed on the first channel through the first and second wireless units 11 and 12.

According to the present embodiment, even in the case of radar detection on the second channel after a shift to wireless communications on the second channel, a shift to a MIMO or non-contiguous mode at 80 + 80 MHz can obtain a transmission speed.

Other operations of the third embodiment are identical to those of the first embodiment. Thus, the third embodiment can further obtain the effect of the first embodiment.

### (Fourth Embodiment)

A fourth embodiment will be described below. In the explanation of the present embodiment, components corresponding to those of the first embodiment are indicated by the same reference numerals as in the first embodiment and the explanation thereof is omitted.

A wireless communication device 10 of the present embodiment further includes a configuration for executing processing after a shift to wireless communications on a second channel through first and second wireless units 11 and 12, unlike the wireless communication device 10 of the second embodiment.

Specifically, in the wireless communication device 10 of the present embodiment, a control unit 15 shifts to wireless communications performed on the second channel through the first and second wireless units 11 and 12, and then the control unit 15 causes the radar detecting unit 14 to perform detection on the second channel.

In the detection on the second channel, if the communication signal through a radar system is detected on the second channel, the radar detecting unit 14 performs detection aiming at searching for a third channel as in the third embodiment.

If the third channel is detected in the detection aiming at searching for the third channel, the control unit 15 causes the channel switching unit 13 to switch the channel set for the first and second wireless units 11 and 12 to the third channel.

The switching to the third channel shifts the control unit 15 to wireless communications performed on the third channel through the first and second wireless units 11 and 12.

If the third channel is not detected in the detection aiming at searching for the third channel, the control unit 15 causes the channel switching unit 13 to switch the channel set for the first and second wireless units 11 and 12 to the first channel.

The switching to the first channel shifts the control unit 15 to wireless communications performed on the first channel through the first and second wireless units 11 and 12.

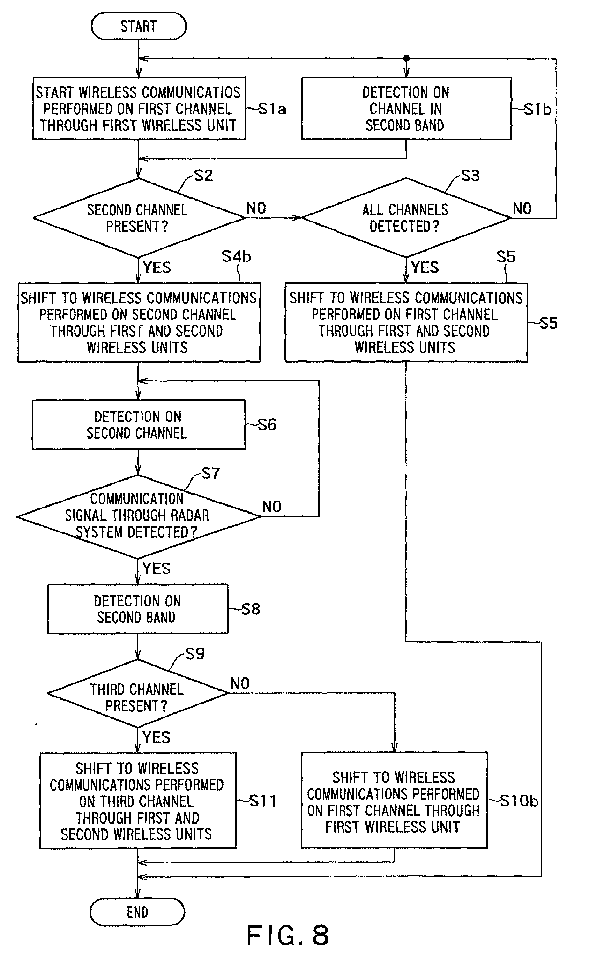

Referring to FIG. 8, an operation example of the wireless communication device 10 according to the present embodiment will be described below. The operation example is an embodiment of a wireless communication method.

FIG. 8 is a flowchart showing the operation example of the wireless communication device 10 according to the fourth embodiment.

As shown in FIG. 8, in the present embodiment, step 11 (S11) is performed instead of step 10a (S10a) illustrated in FIG. 7. In step 11 (S11), the control unit 15 causes the channel switching unit 13 to switch the channel set for the first wireless unit 11 and the second wireless unit 12 to the third channel.

The switching to the third channel shifts the control unit 15 to wireless communications performed on the third channel through the first wireless unit 11 and the second wireless unit 12.

According to the present embodiment, even in the case of radar detection on the second channel after a shift to wireless communications on the second channel, a shift to a MIMO mode can obtain a transmission speed.

Other operations of the fourth embodiment are identical to those of the second embodiment. Thus, the fourth embodiment can further obtain the effect of the second embodiment.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A wireless communication device comprising:
a first wireless unit for which a first channel belonging to a first band is set outside a used band of a second wireless communication system in a used band of a first wireless communication system;
a second wireless unit for which a channel belonging to a second band is set in the used band of the second wireless communication system in the used band of the first wireless communication system;
a detecting unit that detects a communication signal through the second wireless communication system according to a reception result on the channel belonging to the second band by the second wireless unit; and
a control unit that controls the first and second wireless units, and the detecting unit and performs wireless communications through the first wireless communication system,
wherein the control unit starts wireless communications performed on the first channel through the first wireless unit, causes the detecting unit to perform the detection, sets a channel according to a result of the detection for the second wireless unit, and then shifts to wireless communications performed through the first and second wireless units.

2. The wireless communication device according to claim 1, wherein if the communication signal through the second wireless communication system is detected on all channels to be detected, the control unit sets the first channel for the second wireless unit, and then the control unit shifts to wireless communications performed on the first channel through the first and second wireless units.

3. The wireless communication device according to claim 1, wherein if a second channel, on which the communication signal through the second wireless communication system is undetected, is detected in the second band in the detection, the control unit sets the second channel for the second wireless unit, and then the control unit shifts to wireless communications performed on the first and second channels through the first and second wireless units.

4. The wireless communication device according to claim 1, wherein if a second channel, on which the communication signal through the second wireless communication system is undetected, is detected in the second band in the detection, the control unit sets the second channel for the first and second wireless units, and then the control unit shifts to wireless communications performed on the second channel through the first and second wireless units.

5. The wireless communication device according to claim 3, wherein the control unit causes the detecting unit to perform the detection after the control unit shifts to wireless communications performed on the first and second channels through the first and second wireless units, and
if the communication signal through the second wireless communication system is detected on the second channel in the detection and a third channel, on which the communication signal through the second wireless communication system is undetected, is detected in the second band in the detection, the control unit sets the third channel for the second wireless unit, and then the control unit shifts to wireless communications performed on the first and third channels through the first and second wireless units.

6. The wireless communication device according to claim 4, wherein the control unit causes the detecting unit to perform the detection after the control unit shifts to wireless communications performed on the second channel through the first and second wireless units, and
if the communication signal through the second wireless communication system is detected on the second channel in the detection and a third channel, on which the communication signal through the second wireless communication system is undetected, is detected in the second band in the detection, the control unit sets the third channel for the first and second wireless units, and then the control unit shifts to wireless communications performed on the third channel through the first and second wireless units.

7. The wireless communication device according to claim 3, wherein the control unit causes the detecting unit to perform the detection after the control unit shifts to wireless communications performed on the first and second channels through the first and second wireless units, and
if the communication signal through the second wireless communication system is detected on the second channel in the detection, the control unit shifts to wireless communications performed on the first channel through the first wireless unit.

8. The wireless communication device according to claim 4, wherein the control unit causes the detecting unit to perform the detection after the control unit shifts to wireless communications performed on the second channel through the first and second wireless units, and
if the communication signal through the second wireless communication system is detected on the second channel in the detection, the control unit shifts to wireless communications performed on the first channel through the first wireless unit.

9. A wireless communication method in wireless communications through a first wireless communication system, the wireless communications being performed by a wireless communication device comprising a first wireless unit for which a first channel belonging to a first band is set outside a used band of a second wireless communication system in a used band of a first wireless communication system, a second wireless unit for which a channel belonging to a second band is set in the used band of the second wireless communication system in the used band of the first wireless communication system, and a detecting unit that detects a communication signal of the second wireless communication system according to a reception result on the channel belonging to the second band for the second wireless unit,
the wireless communication method including:
starting wireless communications performed on the first channel through the first wireless unit;
causing the detecting unit to perform the detection;
setting a channel according to a result of the detection for the second wireless unit; and
shifting the control unit to wireless communications performed through the first and second wireless units.

10. The wireless communication method according to claim 9, wherein if the communication signal through the second wireless communication system is detected on all channels to be detected, the wireless communication device sets the first channel for the second wireless unit, and then the wireless communication device shifts to wireless communications performed on the first channel through the first and second wireless units.

11. The wireless communication method according to claim 9, wherein if a second channel, on which the communication signal through the second wireless communication system is undetected, is detected in the second band in the detection, the wireless communication device sets the second channel for the second wireless unit, and then the wireless communication device shifts to wireless communications performed on the first and second channels through the first and second wireless units.

12. The wireless communication method according to claim 9, wherein if a second channel, on which the communication signal through the second wireless communication system is undetected, is detected in the second band in the detection, the wireless communication device sets the second channel for the first and second wireless units, and then the wireless communication device shifts to wireless communications performed on the second channel through the first and second wireless units.

13. The wireless communication method according to claim 11, wherein the wireless communication device causes the detecting unit to perform the detection after the wireless communication device shifts to wireless communications performed on the first and second channels through the first and second wireless units, and
if the communication signal through the second wireless communication system is detected on the second channel in the detection and a third channel, on which the communication signal through the second wireless communication system is undetected, is detected in the second band in the detection, the wireless communication device sets the third channel for the second wireless unit, and then the wireless communication device shifts to wireless communications performed on the first and third channels through the first and second wireless units.

14. The wireless communication method according to claim 12, wherein the wireless communication device causes the detecting unit to perform the detection after the wireless communication device shifts to wireless communications performed on the second channel through the first and second wireless units, and
if the communication signal through the second wireless communication system is detected on the second channel in the detection and a third channel, on which the communication signal through the second wireless communication system is undetected, is detected in the second band in the detection, the wireless communication device sets the third channel for the first and second wireless units, and then the wireless communication device shifts to wireless communications performed on the third channel through the first and second wireless units.

15. The wireless communication method according to claim 11, wherein the wireless communication device causes the detecting unit to perform the detection after the wireless communication device shifts to wireless communications performed on the first and second channels through the first and second wireless units, and
if the communication signal through the second wireless communication system is detected on the second channel in the detection, the wireless communication device shifts to wireless communications performed on the first channel through the first wireless unit.
